# EUROPÄISCHE PATENTANMELDUNG

(11) **EP 3 018 025 A1**
(43) Veröffentlichungstag der Anmeldung: **11.05.2016**
(21) Anmeldenummer: 15185832.1
(22) Anmeldetag: 18.09.2015
(51) Int. Cl.: B60W 30/06, B60W 30/10, B62D 15/02

(54) **VERFAHREN ZUR AUTOMATISCHEN QUERFÜHRUNGSASSISTENZ EINES FAHRZEUGS UND VORRICHTUNG ZUR DURCHFÜHRUNG EINES SOLCHEN VERFAHRENS**

(30) Priorität: 06.11.2014 DE 102014222722
(71) Anmelder: ROBERT BOSCH GMBH, 70442 Stuttgart (DE)
(72) Erfinder: Mielenz, Holger, 73760 Ostfildern (DE); Lehner, Philipp, 75417 Muehlacker (DE); Heigele, Christian, 70435 Stuttgart (DE)

(57) **Zusammenfassung**

Die Erfindung betrifft ein Verfahren zur automatischen Querführungsassistenz eines Fahrzeugs. Die Erfindung betrifft auch eine Vorrichtung zur automatischen Querführungsassistenz mit einer Umfeldsensorik 10 zur Erfassung des Umfelds eines Fahrzeuges, mit einem Steuergerät 20, eingerichtet zur Durchführung eines solchen Verfahrens.

## Beschreibung

### Stand der Technik

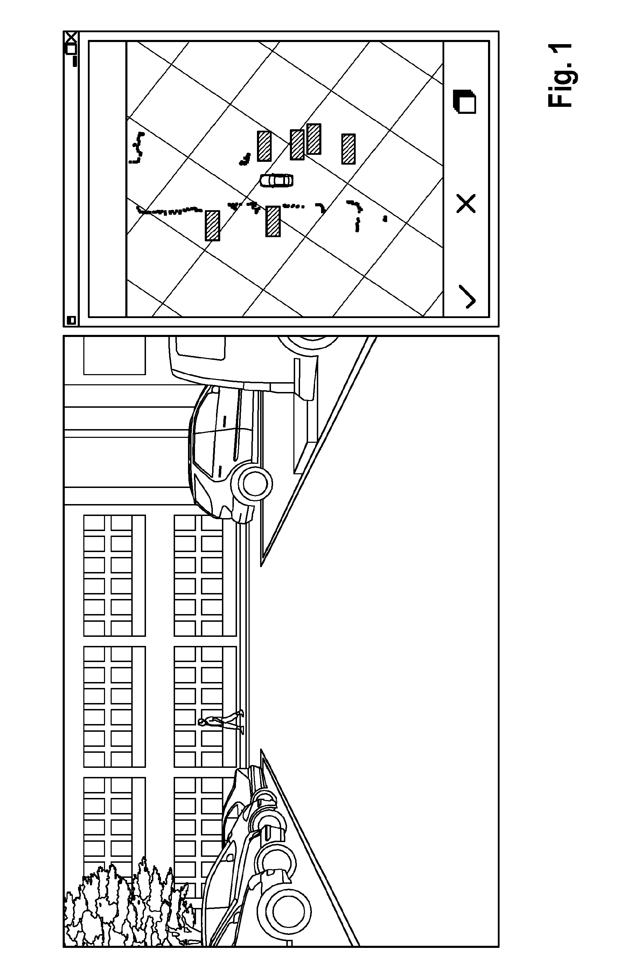

Aktuell sind folgende Fahrerassistenzsysteme bekannt, die dem Fahrer eine automatisierte Fahrhandlung zur Erreichung einer bestimmten Position ermöglichen:
- Nach Vorbeifahrt an einer Parklücke konnte mittels Ultraschallsensorik eine Parklücke ermittelt und dem Fahrer zu Auswahl angeboten werden. Sollte er diese im Stand bestätigen wird eine Unterstützung zur Erreichung dieser ausgewählten Zielposition angeboten.
- Entsprechend Figur 1 werden dem Fahrer vorausschauend Zielpositionen (hier Parklücken) angeboten, die dieser z.B. via Sensorbildschirm auswählen und darüber die Aktivierung einer Querführung- (und Längsführungsassistenz) zur Erreichung dieses Ziel auslösen kann.

Aktuelle Ansätze sehen nicht vor, dass dem Fahrer eine Unterstützung über die zuvor ausgewählte Zielposition hinaus angeboten werden, sollte sich bei weiterer Einfahrt in das Zielpositionsgebiet ergeben, dass der Fahrer nur eine weitere Möglichkeit hat, den dahinterliegenden Bereich zu passieren.

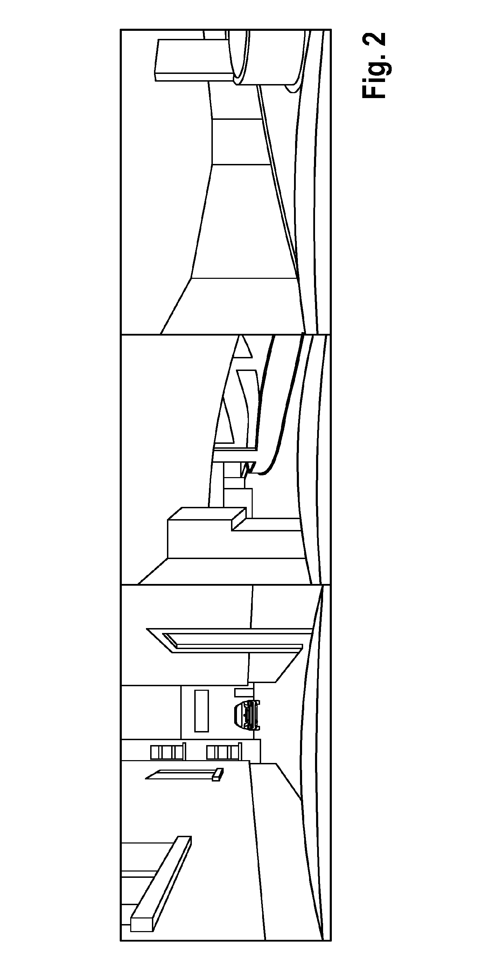

So könnte das Manöverassistenzsystem z.B. auch Ziele zur Auswahl stellen, die mit der aktuellen Umfelderfassung als Engstellen erfasst aber nicht vollständig eingesehen werden. Solche Ziele sind z.B. Engstellen zwischen Häusern, Hinterhofgassen, Parkhausrampen und dergleichen, wie sie Figur 2 entnommen werden können.

Der aktuelle Stand der Technik sieht nicht vor, dem Fahrer in einer solchen Situation eine komfortable, dauerhafte automatisierte Querführung anzubieten.

### Vorteile der Erfindung

Das erfindungsgemäße Verfahren und System ermöglicht die automatische Aktivierung bzw. Fortführung einer automatischen bzw. durch den Fahrer bereits aktivierten Querführungsassistenz (ggf. mit automatischer Längsführung) für den Fall, dass das aktuell Umfeld für den Fahrer nur eine Fahrhandlungsoption zulässt (Einbahn-Situation). Derartige Situationen können sich durch Umfeldobjekt-bedingte Engstellen (Gassen zwischen Häuserschluchten, Parkhausrampen mit flankierten Wänden, beidseitig mit geparkten Fahrzeugen flankierte Straßen und dergleichen) oder Straßenverkehrsinformationen (z.B. Fahrbahnmarkierung, die nach räumlich begrenzter Engstelle nur eine eindeutige Fahrtrichtung erlaubt) ergeben.

Die Erfindung erlaubt eine automatische Aktivierung einer onboard-Fahrerassistenz, wie z.B. ein Lenkmoment (Engstellenassistenz) oder einer automatischen Querführung ohne manuellen Eingriff (Manöverassistenz) für den Fall fehlender Handlungsoptionen. Dies bedeutet vorteilhaft einen Komfortgewinn für den Fahrer, da das Assistenzsystem nicht gesondert bzw. wiederholt aktiviert werden muss. Im Falle fehlender Handlungsoptionen wird eine bereits aktivierte Unterstützung, die zuvor an ein festes Ziel gebunden war, fortgesetzt. Dies bedeutet auch einen Komfortgewinn für den Fahrer, da die Assistenz im Falle einer Einbahn-Situation nicht gesondert aktiviert werden muss, wenn sich der Sichtbereich des Sensors weiter in die Einbahn-Situation erstreckt.

### Zeichnung

Figur 1 zeigt eine Illustration einer Parksituation mit Zielpositionen eines Manöverassistenzsystems, die dem Fahrer zur Auswahl angeboten werden.
Figur 2 zeigt eine Illustration weiterer Fahrsituationen, bei denen ein Fahrer durch eine automatische Querführungsassistenz einen Komfortgewinn besitzen würde.
Figur 3 zeigt eine erfindungsgemäße Vorrichtung zur automatischen Querführungsassistenz.
Figur 4 zeigt ein erfindungsgemäßes Verfahren zur automatischen Querführungsassistenz.

### Ausführungsbeispiele

Figur 1 zeigt eine Illustration einer Parksituation (rechts) mit Zielpositionen eines Manöverassistenzsystems, die dem Fahrer zur Auswahl angeboten werden (rechts, blaue Rechtecke). Die gelben Punkte beschreiben die linksseitig zu sehenden Fahrzeuge, die mittels der vorhandenen Umfelderfassung ermittelt wurden. Ein weiterhin vorhandenes Computerprogramm ermittelt auf Basis der erfassten Umfeldinformationen mögliche Zielpositionen, die dem Fahrer angezeigt werden.

Figur 2 zeigt eine Illustration weiterer Fahrsituationen, bei denen ein Fahrer durch eine automatische Querführungsassistenz einen Komfortgewinn besitzen würde. Für gewöhnlich kann das Ende einer solche eindeutigen Fahrsituation, z.B. rechts das Ende der Spiralfahrt, nicht zu Beginn bei Erstdetektion der "Eintrittsstelle" (siehe mittleres Bild der Schranke") erkannt werden. In einem solchen Falle würde der Manöverassistent aus Abbildung 1 eine Zielposition für die Eintrittstelle dem Fahrer vorausschauen anzeigen. Z.B. für die Gasse im linken Bild bei Annäherung von der Straße und der beengten Einfahrt zur Schranke im mittleren Bild.

Gegenstand der Erfindung ist es, eine durch den Fahrer aktivierte Fahrerassistenz für eine spezifische Situation aufrechtzuerhalten, wenn sich durch Annäherung des Fahrzeugs zur zuvor ausgewählten Zielposition mittels mitgeführter onboard-Sensorik ergibt, dass der Fahrer nur eine Möglichkeit hat, die Fahrt in die aktuelle Fahrrichtung fortzusetzen.

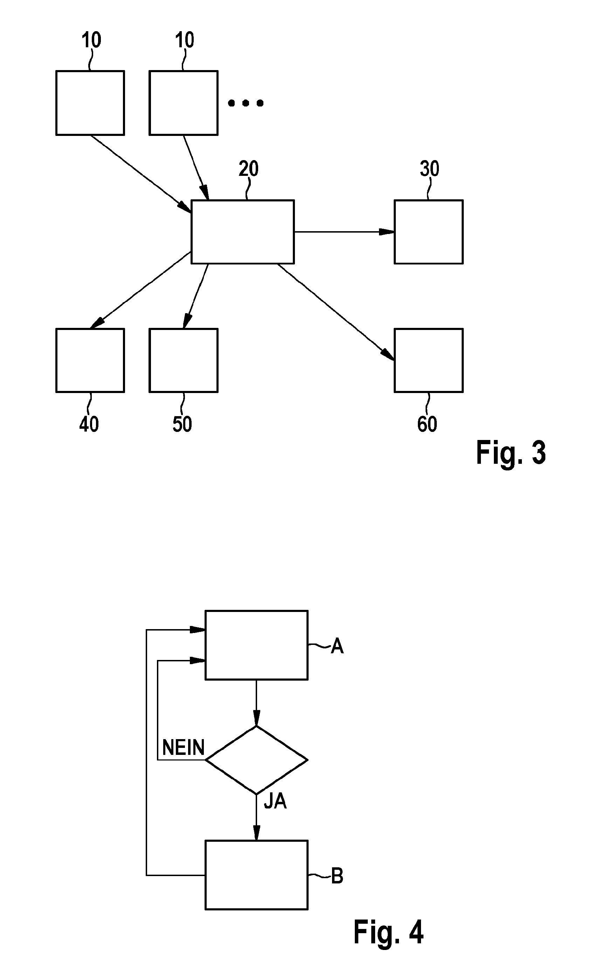

Figur 3 zeigt eine erfindungsgemäße Vorrichtung zur automatischen Querführungsassistenz. Dargestellt ist eine Umfeldsensorik 10 zur Erfassung des Umfelds eines Fahrzeuges, bevorzugt des statischen Umfelds und ein Steuergerät 20 und Algorithmen zur Verarbeitung der Umfeldsensordaten und Extraktion wenigstens einer Zielposition, die dem Fahrer zur Auswahl angeboten wird. Weiterhin ist in der Figur 3 ein Fahreranzeigeinstrument 30 zur Darstellung des erfassten Umfelds und der erkannten Zielposition gezeigt. Das Steuergerät 20 ist eingerichtet zur Übermittelung der ausgewählten Zielposition und beinhaltet Algorithmen zur Ermittlung eines Pfades zur Erreichung der Zielposition. Außerdem sind ein Fahrzeugregler 40 und Aktoren 50 zum Erreichen der Zielposition auf dem geplanten Pfad dargestellt. Ferner besitzt das System eine Fahrerinformationseinheit 60 die den Fahrer dahingehend informiert, dass die anfangs ausgewählte Unterstützung durch das erkannte Vorliegen einer eindeutigen Fahrstrecke länger aufrechterhalten werden kann

Figur 4 zeigt ein erfindungsgemäßes Verfahren zur automatischen Querführungsassistenz. Das erfindungsgemäße Verfahren umfasst Algorithmen zur Nutzung der während der unterstützten Fahrt erfassten Umfelddaten zur fortlaufenden Prüfung in einem ersten Schritt A, ob sich hinter der anfänglich ausgewählten Zielposition eine Fahrstrecke ergibt, die nur eine Fahrhandlung offen legt. Diese können über die Durchfahrtbreiten zwischen erhabenen Objekten, Fahrspuren, Fahrstreifen und dergleichen ermittelt werden.

Abhängig vom Ergebnis der Prüfung im ersten Schritt erfolgt in einem zweiten Schritt B eine Querführung bis zum Ende der eindeutigen Fahrstrecke im aktuellen Sichtfeld oder Erfassungsbereich der Umfeldsensoren. Zusätzlich kann auch eine automatische Längsführung bis zum Ende der eindeutigen Fahrstrecke erfolgen. Die Schritte A und B werden fortlaufend durchgeführt, bis die Umfeldsensorik eine Fahrstrecke erfasst, die nicht mehr eindeutig ist. Dies wird beispielsweise darüber ermittelt, dass keine Engstelle mehr vorliegt oder vorausschauend eine Weggabelung erfasst wird, z.B. zwischen erhabenen Objekten, Straßenmarkierungen, usw., sodass es mehrere Möglichkeiten der Querführung gibt.

Ferner kann der Fahrer die Aufrechterhaltung der Assistenz auch jederzeit abbrechen. Dies wird beispielsweise durch einen Eingriff ins Lenkrad oder auch die Betätigung der Bremse ausgelöst. Weitere Möglichkeiten die Assistenz abzubrechen sind denkbar.

### Bezugszeichenliste

- 10: Umfeldsensorik
- 20: Steuergerät zur Verarbeitung der Umfeldsensordaten
- 30: Fahreranzeigeinstrument zur Darstellung des Umfelds und der erkannten Zielposition
- 40: Fahrzeugregler
- 50: Aktoren zum Erreichen der Zielposition auf dem geplanten Pfad
- 60: Fahrerinformationseinheit

## Patentansprüche

1. Verfahren zur automatischen Querführungsassistenz eines Fahrzeugs mit den Schritten:
(A) fortlaufende Prüfung ob sich hinter einer anfänglich ausgewählten Zielposition eine Fahrstrecke (1) ergibt, die in einer Fahrtrichtung genau eine Möglichkeit der Querführung bietet.
(B) Im Fall eines positiven Prüfungsergebnisses Durchführen einer Längsführung bis zum Ende der Fahrstrecke (1); danach Übergehen zum Schritt (A)

2. Verfahren zur automatischen Querführungsassistenz eines Fahrzeugs nach Anspruch 1, **dadurch gekennzeichnet, dass** im Schritt (B) Im Fall eines positiven Prüfungsergebnisses zusätzlich eine Längsführung bis zum Ende der Fahrstrecke (1) durchgeführt wird.

3. Vorrichtung zur automatischen Querführungsassistenz mit einer Umfeldsensorik (10) zur Erfassung des Umfelds eines Fahrzeuges, mit einem Steuergerät (20), eingerichtet zur Durchführung eines Verfahrens nach Anspruch 1 oder 2.
